# EUROPEAN PATENT APPLICATION

(11) **EP 4 245 502 A1**
(43) Date of publication of application: **20.09.2023**
(21) Application number: 23162172.3
(22) Date of filing: 15.03.2023
(51) Int. Cl.: B29C 45/17, B29C 45/77

(54) **WATER-ASSISTED MELT-PUSH-BACK INJECTION MOLDING METHOD AND WATER-ASSISTED INJECTION MOLDING MACHINE**

(30) Priority: 16.03.2022 CN 202210255034
(71) Applicant: Yizumi Precision Machinery (Suzhou) Co., Ltd, Suzhou, Jiangsu 215299 (CN); Yizumi Precision Molding Technology Co., Ltd., Foshan, Guangdong 528000 (CN)
(72) Inventor: QI, Mingchao, Suzhou, 215299 (CN); HOU, Yongping, Suzhou, 215299 (CN); ZHANG, Min, Suzhou, 215299 (CN); KUANG, Tianzhi, Suzhou, 215299 (CN)
(74) Representative: Monteiro Alves, Inês

(57) **Abstract**

Disclosed are a water-assisted melt-push-back injection molding method and a water-assisted injection molding machine. The fluid injection device communicates with the mold. The water-assisted melt-push-back injection molding method includes: controlling the fluid injection device to inject the fluid into the mold, to push an unsolidified plastic melt back into the barrel; obtaining a fluid pressure value of the fluid, a current pressure value of the barrel, and a displacement of the injection molding assembly in the barrel; adjusting a movement velocity of the injection molding assembly moving away from the mold according to the fluid pressure value, the current pressure value of the barrel and the displacement.

## Description

### TECHNICAL FIELD

The present disclosure relates to the technical field of water-assisted injection molding, in particular to a water-assisted melt-push-back injection molding method and a water-assisted injection molding machine.

### BACKGROUND

With the global trend of replacing steel with plastic, more and more parts in all walks of life are replaced by plastic. Through the water-assisted process, holes can form inside plastic products, which may further reduce the product weight and the product internal stress.

After exchanging with the advanced technology of foreign countries, the melt reverse squeezing process of the water-assisted technology has been gradually promoted. Compared with the conventional water-assisted injection molding process, in this melt reverse squeezing process, the plastic melt pushed away by water will be pushed back into the mold hot runner and the material tube of the machine, then the plastic melt may directly participate in the next injection. The flash package of conventional water-assisted and gas-assisted molds will not be used in the mold during the melt reverse squeezing process, which further improves the utilization rate of raw materials and reduces material costs. However, when the plastic melt is pushed back into the mold hot runner and the material tube of the machine, the pressure changes unstably, resulting in an inconsistent wall thickness of the product.

### SUMMARY

The main purpose of the present disclosure is to provide a water-assisted melt-push-back injection molding method and a water-assisted injection molding machine, aiming to improve product consistency.

In order to achieve the above objectives, the present disclosure provides a water-assisted melt-push-back injection molding method, applied to a water-assisted injection molding machine. The water-assisted injection molding machine includes a barrel for injecting a plastic melt into a mold, an injection molding assembly for injecting the plastic melt in the barrel into the mold, and a fluid injection device for injecting fluid. The fluid injection device is communicated with the mold. The water-assisted melt-push-back injection molding method includes following operations:
controlling the fluid injection device to inject the fluid into the mold, to push an unsolidified plastic melt back into the barrel;
obtaining a fluid pressure value of the fluid, a current pressure value of the barrel, and a displacement of the injection molding assembly in the barrel; and
adjusting a movement velocity of the injection molding assembly moving away from the mold according to the fluid pressure value, the current pressure value of the barrel and the displacement.

In an embodiment, the operation of adjusting the movement velocity of the injection molding assembly moving away from the mold according to the fluid pressure value, the current pressure value of the barrel and the displacement includes:
calculating the fluid pressure value of the fluid and the current pressure value of the barrel, to obtain an actual pressure difference value; and
adjusting the movement velocity of the injection molding assembly moving away from the mold according to the actual pressure difference value and a preset pressure difference value.

In an embodiment, the operation of adjusting the movement velocity of the injection molding assembly moving away from the mold according to the actual pressure difference value and the preset pressure difference value includes:
comparing the actual pressure difference value with the preset pressure difference value, and when the actual pressure difference value is less than the preset pressure difference value, reducing the current pressure value of the barrel;
   or,
when the actual pressure difference value is greater than the preset pressure difference value, increasing the current pressure value of the barrel.

In an embodiment, the water-assisted injection molding machine further includes an injection cylinder for adjusting the current pressure value of the barrel, and a servo valve for controlling pressure of the injection cylinder. The injection cylinder includes an injection cavity and a retreat cavity. The operation of comparing the actual pressure difference value with the preset pressure difference value, and when the actual pressure difference value is less than the preset pressure difference value, reducing the current pressure value of the barrel, when the actual pressure difference value is greater than the preset pressure difference value, increasing the current pressure value of the barrel includes:
when the actual pressure difference value is less than the preset pressure difference value, controlling the servo valve to reduce pressure in the injection cavity or increase pressure in the release cavity; and
when the actual pressure difference value is greater than the preset pressure difference value, controlling the servo valve to increase pressure in the injection cavity or reduce pressure in the release cavity.

In an embodiment, the operation of adjusting the movement velocity of the injection molding assembly moving away from the mold according to the fluid pressure value, the current pressure value of the barrel and the displacement includes:
calculating the fluid pressure value, to obtain a fluid velocity value;
calculating the displacement, to obtain a current velocity value of the injection molding assembly;
calculating the fluid velocity value and the current velocity value of the injection molding assembly, to obtain an actual velocity difference value per unit time; and
adjusting the movement velocity of the injection molding assembly moving away from the mold according to the actual velocity difference value and a preset velocity difference value.

In an embodiment, the operation of adjusting the movement velocity of the injection molding assembly moving away from the mold according to the actual velocity difference value and the preset velocity difference value includes:
comparing the actual velocity difference value with the preset velocity difference value, if the actual velocity difference value is less than the preset velocity difference value, increasing the current pressure value of the barrel; if the actual velocity difference value is greater than the preset velocity difference value, reducing the current pressure value of the barrel.

In an embodiment, the water-assisted injection molding machine further includes an injection cylinder for adjusting the current pressure value of the barrel, and a servo valve for controlling pressure of the injection cylinder. The injection cylinder includes an injection cavity and a retreat cavity. The operation of comparing the actual velocity difference value with the preset velocity difference value, if the actual velocity difference value is less than the preset velocity difference value, increasing the current pressure value of the barrel; if the actual velocity difference value is greater than the preset velocity difference value, reducing the current pressure value of the barrel includes:
when the actual velocity difference value is less than the preset velocity difference value, controlling the servo valve to increase pressure in the injection cavity or reduce pressure in the release cavity; and
when the actual velocity difference value is greater than the preset velocity difference value, controlling the servo valve to reduce pressure in the injection cavity or increase pressure in the release cavity.

The present disclosure further provides a water-assisted injection molding machine including a barrel provided with an injection molding part, an injection molding assembly movably connected to the barrel, a fluid injection device provided with a fluid injection part, a pressure control assembly electrically connected to a host computer, a memory and a processor.

The barrel is configured to inject a plastic melt into a mold.

The injection molding assembly is configured to inject the plastic melt of the barrel into the mold.

The fluid injection device is configured to inject fluid into the mold.

The pressure control assembly is connected to the injection molding assembly, and the pressure control assembly is controlled by the host computer to adjust a movement velocity of the injection molding assembly moving away from the mold.

The memory stores a water-assisted melt-push-back injection molding program, and when the water-assisted melt-push-back injection molding program is executed by the processor, the water-assisted melt-push-back injection molding method as mentioned above is realized.

In an embodiment, the pressure control assembly includes a servo valve electrically connected to the host computer, an injection cylinder connected to the servo valve, and a piston rod movably connected to the injection cylinder. The servo valve is controlled by the host computer to increase or reduce fluid pressure in the injection cylinder.

In an embodiment, the water-assisted injection molding machine further includes a first pressure sensor provided at the injection molding part of the barrel, a position sensor provided in the injection cylinder, and a second pressure sensor provided at the fluid injection part of the fluid injection device.

The first pressure sensor is electrically connected to the host computer, and the first pressure sensor is configured to detect a current pressure value of the injection molding part of the barrel.

The position sensor is connected to the host computer, and the position sensor is configured to detect a displacement of the injection molding assembly.

The second pressure sensor is electrically connected to the host computer, and the second pressure sensor is configured to detect fluid pressure of the fluid injection part of the fluid injection device.

In the present disclosure, the current pressure value of the plastic melt pushed back in the barrel is adjusted in real time according to the fluid pressure value, the current pressure value of the plastic melt pushed back in the barrel, and the displacement of the injection molding assembly in the barrel, and then the movement velocity of the injection molding assembly moving away from the mold is adjusted. In this way, a constant retreat acceleration of the plastic melt can be ensured, the pressure on each part of the product can be constant, and the wall thickness of the final product can be consistent.

### BRIEF DESCRIPTION OF THE DRAWINGS

In order to more clearly illustrate technical solutions in the embodiments of the present disclosure or the related art, drawings used in the embodiments or the related art will be briefly described below. Obviously, the drawings in the following description are only some embodiments of the present disclosure. It will be apparent to those skilled in the art that other figures can be obtained according to the structures shown in the drawings without creative work.
FIG. 1 is a schematic flowchart of operations of a water-assisted melt-push-back injection molding method according to an embodiment of the present disclosure.
FIG. 2 is a schematic structural view of a water-assisted injection molding machine according to an embodiment of the present disclosure.

The realization of the objective, functional characteristics, and advantages of the present disclosure are further described with reference to the accompanying drawings.

### DETAILED DESCRIPTION OF THE EMBODIMENTS

The technical solutions of the embodiments of the present disclosure will be described in more detail below with reference to the accompanying drawings. It is obvious that the embodiments to be described are only some rather than all of the embodiments of the present disclosure. All other embodiments obtained by persons skilled in the art based on the embodiments of the present disclosure without creative efforts shall fall within the scope of the present disclosure.

It should be noted that all directional indications (such as up, down, left, right, front, rear...) in the embodiments of the present disclosure, are only configured to explain the relative positional relationship, movement, etc. of the components in a certain posture (as shown in the drawings). If the specific posture changes, the directional indication will change accordingly.

In addition, the descriptions associated with, e.g., "first" and "second," in the present disclosure are merely for descriptive purposes, and cannot be understood as indicating or suggesting relative importance or impliedly indicating the number of the indicated technical feature. Therefore, the feature associated with "first" or "second" can expressly or impliedly include at least one such feature. In addition, the technical solutions between the various embodiments can be combined with each other, but they must be based on the realization of those of ordinary skill in the art. When the combination of technical solutions is contradictory or cannot be achieved, it should be considered that such a combination of technical solutions does not exist, nor is it within the scope of the present disclosure.

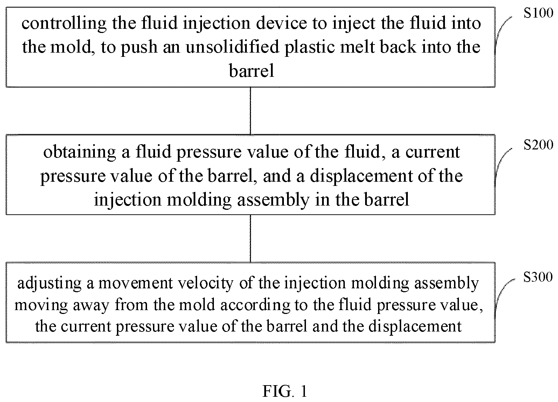

As shown in FIG. 1, the present disclosure provides a water-assisted melt-push-back injection molding method, applied to a water-assisted injection molding machine. The water-assisted injection molding machine includes a barrel for injecting a plastic melt into a mold, an injection molding assembly for injecting the plastic melt in the barrel into the mold, and a fluid injection device for injecting fluid. The fluid injection device is communicated with the mold. The water-assisted melt-push-back injection molding method includes following operations.

S100, controlling the fluid injection device to inject the fluid into the mold, to push an unsolidified plastic melt back into the barrel.

S200: obtaining a fluid pressure value of the fluid, a current pressure value of the barrel, and a displacement of the injection molding assembly in the barrel.

S300: adjusting a movement velocity of the injection molding assembly moving away from the mold according to the fluid pressure value, the current pressure value of the barrel and the displacement.

In the water-assisted injection molding process, to improve the utilization rate of raw materials and reduce material waste, when the injection molding of the plastic melt is finished and the fluid is injected into the mold, the plastic melt pushed away by water will be pushed back into the mold hot runner and the material tube of the machine, then directly participate in the next injection molding.

It should be noted that the fluid reverse squeezing process includes two methods.

The first method is that when the injection molding of the plastic melt is finished, the piston rod drives the injection molding assembly to actively retreat for a certain distance, reserving the space required for the plastic pushed back in advance. Then injecting high-pressure water into the mold to push the unsolidified melt back to the barrel, and forming a cavity inside the product. This process is easy for controlling. However, in the material tube, the cavity is reserved in advance, and no pressure will support the material tube, thus, when the melt is pushed back, pressure is prone to change due to the inconsistent size of various parts of the product wall, resulting in inconsistent wall thickness of the product after molding.

The second method is that when the melt is pushed back, the injection molding assembly is passively pushed back by the melt, and a certain pressure is given by the injection cavity of the injection cylinder, to ensure that the fluid pressure is constant during injection and the wall thickness of the final product is consistent. The control during this process is complicated. The fluid injection pressure and the back pressure of the injection cavity of the injection cylinder need to be accurately controlled, to keep pressure constant when the fluid is injected. When this process is performed on some large injection platforms, due to the relatively large weight of the oil cylinder, the piston, the injection molding assembly, the barrel and other components, the friction force is relatively large, and the area of the flow channel is usually small, which will make the friction force hard to be overcome when the fluid is pushed back, thereby making this process impossible to complete.

Due to the relatively large weight of the oil cylinder, the piston, the screw, the barrel and other components, the friction force is relatively large, and the pressure value of the injected fluid is not constant. Therefore, the current pressure value of the plastic melt pushed back into the barrel needs to be adjusted in real time according to the fluid pressure value, to ensure that the pressure on each part of the product is constant when the plastic melt is pushed back, and the wall thickness of the final product is consistent.

When fluid is injected into the mold, the plastic melt in the mold is pushed back under pressure, which drives the injection molding assembly back. Obtaining the fluid pressure value, the current pressure value of the plastic melt pushed back in the barrel, and the displacement of the injection molding assembly in the barrel. Adjusting the current pressure value of the plastic melt pushed back in the barrel according to the fluid pressure value and the current pressure value of the plastic melt pushed back in the barrel, and then adjusting the movement velocity of the injection molding assembly moving away from the mold. Or adjusting the current pressure value of the plastic melt pushed back in the barrel according to the fluid pressure value and the displacement of the injection molding assembly in the barrel, then adjusting the movement velocity of the injection molding assembly moving away from the mold.

In the present disclosure, the current pressure value of the plastic melt pushed back in the barrel is adjusted in real time according to the fluid pressure value, the current pressure value of the plastic melt pushed back in the barrel, and the displacement of the injection molding assembly in the barrel, and then the movement velocity of the injection molding assembly moving away from the mold is adjusted. In this way, a constant retreat acceleration of the plastic melt can be ensured, the pressure on each part of the product can be constant, and the wall thickness of the final product can be consistent.

In an embodiment, the operation of adjusting a movement velocity of the injection molding assembly moving away from the mold according to the fluid pressure value, the current pressure value of the barrel and the displacement includes: subtracting the current pressure value of the barrel from the fluid pressure value to obtain an actual pressure difference value; and adjusting the movement velocity of the injection molding assembly moving away from the mold according to the actual pressure difference value and the preset pressure difference value.

In this embodiment, the actual pressure difference value is calculated according to the fluid pressure value and the current pressure value of the plastic melt pushed back in the barrel. When the actual pressure difference value is inconsistent with the preset pressure difference value, adjusting the current pressure value of the plastic melt pushed back in the barrel, to keep the actual pressure difference value constant, thereby ensuring a constant retreat acceleration of the plastic melt. In this way, the plastic melt can be pushed back smoothly without affecting the wall thickness of the product.

In an embodiment, the operation of adjusting the movement velocity of the injection molding assembly moving away from the mold according to the actual velocity difference value and the preset velocity difference value includes: comparing the actual pressure difference value with the preset pressure difference value, if the actual pressure difference value is less than the preset pressure difference value, reducing the current pressure value of the barrel; if the actual pressure difference value is greater than the preset pressure difference value, increasing the current pressure value of the barrel.

When the actual pressure difference value is less than the preset pressure difference value, it means that the fluid pressure value in the barrel becomes lower or the current pressure value of the plastic melt pushed back into the barrel is too high. In this case, the current pressure value of the plastic melt pushed back into the barrel should be reduced. When the actual pressure difference value is greater than the preset pressure difference value, it means that the fluid pressure value becomes higher or the current pressure value of the plastic melt pushed back into the barrel is too low. In this case, the current pressure value of the plastic melt pushed back into the barrel should be increased.

In this embodiment, the current pressure value of the plastic melt pushed back in the barrel is adjusted in real time according to changes of the fluid pressure value, to keep the actual pressure difference value constant, thereby ensuring a constant retreat acceleration of the plastic melt and a consistent wall thickness of the final product.

In an embodiment, the water-assisted injection molding machine further includes an injection cylinder for adjusting the current pressure value of the barrel and a servo valve for controlling pressure of the injection cylinder. The injection cylinder includes an injection cavity and a retreat cavity. The operation of comparing the actual pressure difference value with the preset pressure difference value, when the actual pressure difference value is less than the preset pressure difference value, reducing the current pressure value of the barrel, and when the actual pressure difference value is greater than the preset pressure difference value, increasing the current pressure value of the barrel includes:
when the actual pressure difference value is less than the preset pressure difference value, controlling the servo valve to reduce the pressure in an injection cavity or increase the pressure in a release cavity; and
when the actual pressure difference value is greater than the preset pressure difference value, controlling the servo valve to increase the pressure in the injection cavity or reduce the pressure in the release cavity.

In an embodiment, the injection molding assembly includes a push rod, a piston rod and an injection tail. The push rod is movably connected to the barrel, and the piston rod is movably connected to the pressure control assembly. The injection tail is respectively connected to the push rod and the piston rod, and the piston rod is controlled by the pressure control assembly to adjust pressure on the injection tail, thereby adjusting pressure on the push rod.

When the actual pressure difference value is less than the preset pressure difference value, it means that the fluid pressure value in the barrel becomes lower or the current pressure value of the plastic melt pushed back into the barrel is too high. Controlling the servo valve to release the excess pressure in the injection cavity or add pressure to the retreat cavity. In this case, the pressure of the piston rod on the injection tail increases, the pressure of the injection tail on the push rod decreases, and the pressure of the push rod on the plastic melt pushed back into the barrel decreases, thereby reducing the current pressure value of the plastic melt pushed back into the barrel.

When the actual pressure difference value is greater than the preset pressure difference value, it means that the fluid pressure value becomes higher or the current pressure value of the plastic melt pushed back into the barrel is too small. Controlling the servo valve to add pressure in the injection cavity or release the excess pressure of the retreat cavity. In this case, the pressure of the piston rod on the injection tail decreases, the pressure of the injection tail on the push rod increases, and the pressure of the push rod on the plastic melt pushed back into the barrel increases, thereby increasing the current pressure value of the plastic melt pushed back into the barrel.

In this embodiment, the pressure in the injection cylinder is controlled by the servo valve, then the pressure of the injection molding assembly on the plastic melt pushed back into the barrel is controlled. In this way, the difficult control on the pressure of the plastic melt pushed back into the barrel is converted into an easy control on the pressure in the injection cylinder. The method is easier for controlling, and the pressure will be controlled accurately.

In an embodiment, the operation of adjusting a movement velocity of the injection molding assembly moving away from the mold according to the fluid pressure value, the current pressure value of the barrel and the displacement includes:
calculating the fluid pressure value to obtain a fluid velocity value;
calculating the displacement to obtain a current velocity value of the injection molding assembly;
subtracting the current velocity value of the injection molding assembly from the fluid velocity value to obtain an actual velocity difference value per unit time; and
adjusting the movement velocity of the injection molding assembly moving away from the mold according to the actual velocity difference value and a preset velocity difference value.

In this embodiment, the actual velocity difference value per unit time is obtained by calculating the fluid pressure value and the displacement of the injection molding assembly in the barrel. When the actual velocity difference value is inconsistent with the preset velocity difference value, adjusting the current pressure value of the plastic melt pushed back in the barrel, to keep the actual velocity difference value constant, thereby ensuring a constant retreat acceleration of the plastic melt, so that the plastic melt can be pushed back smoothly without affecting the product wall thickness.

In an embodiment, the operation of adjusting the movement velocity of the injection molding assembly moving away from the mold according to the actual velocity difference value and the preset velocity difference value includes comparing the actual velocity difference value with the preset velocity difference value, if the actual velocity difference value is less than the preset velocity difference value, reducing the current pressure value of the barrel; if the actual velocity difference value is greater than the preset velocity difference value, increasing the current pressure value of the barrel.

When the actual velocity difference value is less than the preset velocity difference value, it means that the fluid pressure value in the barrel becomes lower or the current pressure value of the plastic melt pushed back into the barrel is too high. In this case, the current pressure value of the plastic melt pushed back into the barrel should be reduced. When the actual velocity difference value is greater than the preset velocity difference value, it means that the fluid pressure value becomes higher or the current pressure value of the plastic melt pushed back into the barrel is too small. In this case, the current pressure value of the plastic melt pushed back into the barrel should be increased.

In this embodiment, the current pressure value of the plastic melt pushed back in the barrel is adjusted in real time according to changes of the fluid pressure value, to keep the actual pressure difference value constant, thereby ensuring that the actual velocity difference value is constant. That is, the retreat acceleration of the plastic melt is constant, to ensure consistent wall thickness of the final product.

In an embodiment, the water-assisted injection molding machine further includes an injection cylinder for adjusting the current pressure value of the barrel and a servo valve for controlling pressure of the injection cylinder. The injection cylinder includes an injection cavity and a retreat cavity. The operation of comparing the actual velocity difference value with the preset velocity difference value, when the actual velocity difference value is less than the preset velocity difference value, increasing the current pressure value of the barrel, and when the actual velocity difference value is greater than the preset velocity difference value, reducing the current pressure value of the barrel includes:
when the actual velocity difference value is less than the preset velocity difference value, controlling the servo valve to reduce the pressure in an injection cavity or increase the pressure in a release cavity; and
when the actual velocity difference value is greater than the preset velocity difference value, controlling the servo valve to increase the pressure in the injection cavity or reduce the pressure in the release cavity.

In an embodiment, the injection molding assembly includes a push rod and an injection tail. The push rod is movably connected to the barrel. The injection tail is respectively connected to the push rod and the piston rod. The piston rod is controlled by the servo valve to adjust pressure on the injection tail, thereby adjusting pressure on the push rod from the injection tail.

When the actual velocity difference value is less than the preset velocity difference value, it means that the fluid pressure value in the barrel becomes lower or the current pressure value of the plastic melt pushed back into the barrel is too high. Controlling the servo valve to release the excess pressure in the injection cavity or add pressure to the retreat cavity. In this case, the pressure of the piston rod on the injection tail increases, the pressure of the injection tail on the push rod decreases, and the pressure of the push rod on the plastic melt pushed back into the barrel decreases, thereby reducing the current pressure value of the plastic melt pushed back into the barrel, and increasing the actual velocity difference value per unit time.

When the actual velocity difference value is greater than the preset velocity difference value, it means that the fluid pressure value becomes higher or the current pressure value of the plastic melt pushed back into the barrel is too low. Controlling the servo valve to add pressure to the injection cavity or release the excess pressure in the retreat cavity. In this case, the pressure of the piston rod on the injection tail decreases, the pressure of the injection tail on the push rod increases, and the pressure of the push rod on the plastic melt pushed back into the barrel increases, thereby increasing the current pressure value of the plastic melt pushed back into the barrel, and reducing the actual velocity difference value per unit time.

In this embodiment, the pressure in the injection cylinder is controlled by the servo valve, and the pressure of the injection molding assembly on the plastic melt pushed back into the barrel is controlled. In this way, the difficult control on the pressure of the plastic melt pushed back into the barrel is converted into an easy control on the pressure in the injection cylinder. The method is easier for controlling, and the pressure will be controlled accurately.

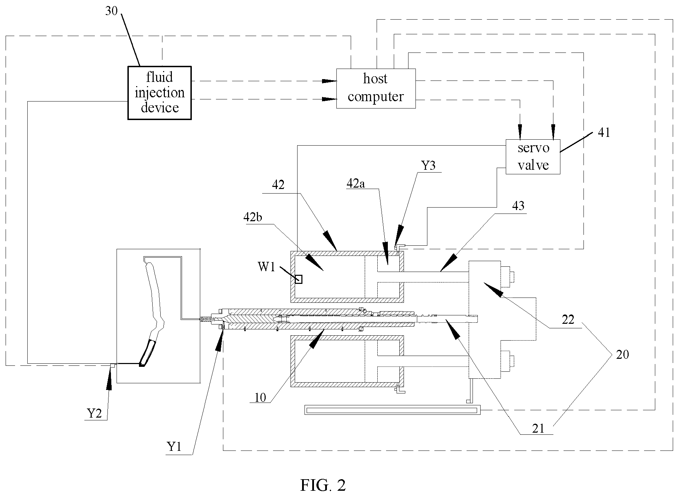

As shown in FIG. 2, the present disclosure further provides a water-assisted injection molding machine including a barrel 10 provided with an injection molding part, an injection molding assembly 20, a fluid injection device 30, a pressure control assembly, a memory and a processor.

The barrel 10 is configured to inject a plastic melt into the mold.

The injection molding assembly 20 is movably connected to the barrel 10, and the injection molding assembly 20 is configured to inject the plastic melt in the barrel 10 into the mold.

The fluid injection device 30 is provided with a fluid injection part, and the fluid injection device 30 is configured to inject fluid into the mold.

The pressure control assembly is electrically connected to a host computer, and the pressure control assembly is connected to the injection molding assembly 20. The pressure control assembly is controlled by the host computer to adjust pressure of the injection molding assembly 20.

The memory stores a water-assisted melt-push-back injection molding program, and when the water-assisted melt-push-back injection molding program is executed by the processor, the water-assisted melt-push-back injection molding method as mentioned above is realized.

In the present disclosure, the current pressure value of the plastic melt pushed back in the barrel 10 is adjusted in real time according to the fluid pressure value, the current pressure value of the plastic melt pushed back in the barrel 10, and the displacement of the injection molding assembly 20 in the barrel 10. Then the movement velocity of the injection molding assembly 20 moving away from the mold is adjusted, to ensure a constant retreat acceleration of the plastic melt. In this way, the pressure on each part of the product is constant, and the wall thickness of the final product is consistent.

In an embodiment, the pressure control assembly includes a servo valve 41, an injection cylinder 42, and a piston rod 43.

The servo valve 41 is electrically connected to the host computer.

The injection cylinder 42 is connected to the servo valve 41.

The piston rod 43 is movably connected to the injection cylinder 42.

The servo valve 41 is controlled by the host computer to increase or reduce a fluid pressure in the injection cylinder 42.

In an embodiment, the injection cylinder 42 includes an injection cavity 42a and a release cavity 42b.

When the difference value between the current pressure value and the fluid pressure value is less than the preset pressure difference value, or the difference value between the actual driving velocity and the fluid velocity is less than the preset velocity difference value, the host computer controls the servo valve 41 to reduce the pressure in the injection cavity 42a or increase the pressure in the retreat cavity 42b.

When the difference value between the current pressure value and the fluid pressure value is greater than the preset pressure difference value, or the difference value between the actual driving velocity and the fluid velocity is greater than the preset velocity difference value, the host computer controls the servo valve 41 to increase the pressure in the injection cavity 42a or reduce the pressure in the retreat cavity 42b.

In an embodiment, the injection molding assembly 20 includes a push rod 21 and an injection tail 22.

The push rod 21 is movably connected to the barrel 10.

The injection tail 22 is respectively connected to the push rod 21 and the piston rod 43.

The piston rod 43 is controlled by the servo valve 41 to adjust the pressure on the injection tail 22, then adjust the pressure of the injection tail 22 on the push rod 21.

In this embodiment, the pressure in the injection cylinder 42 is controlled by the servo valve 41, and the pressure of the piston rod 43 on the push rod 21 is controlled. In this way, the difficult control on the pressure of the plastic melt pushed back into the barrel 10 is converted into an easy control on the pressure in the injection cylinder 42. The method is easier for controlling, and the pressure will be controlled accurately.

In an embodiment, the water-assisted injection molding machine further includes a first pressure sensor Y1, a position sensor W1, and a second pressure sensor Y2.

The first pressure sensor Y1 is provided at the injection molding part of the barrel 10. The first pressure sensor Y1 is electrically connected to the host computer, and the first pressure sensor Y1 is configured to detect the current pressure value of the injection molding part of the barrel 10.

The position sensor W1 is provided in the injection cylinder 42. The position sensor W1 is connected to the host computer, and the position sensor W1 is configured to detect a displacement of the injection molding assembly 20 in the barrel 10.

The second pressure sensor Y2 is provided at the fluid injection part of the fluid injection device 30. The second pressure sensor Y2 is electrically connected to the host computer, and the second pressure sensor Y2 is configured to detect the fluid pressure of the fluid injection part of the fluid injection device 30.

In this embodiment, the first pressure sensor Y1 is configured to detect the current pressure value of the injection molding part of the barrel 10. The second pressure sensor Y2 is configured to detect the fluid pressure of the fluid injection part of the fluid injection device 30. The position sensor W1 is configured to detect the displacement of the piston rod 43 in the injection cylinder 42. The difficult detection for the displacement of the injection molding assembly 20 in the barrel 10 is converted into an easy detection for the displacement of the piston rod 43 in the injection cylinder 42.

In an embodiment, the pressure control assembly further includes a third pressure sensor Y3.

The third pressure sensor Y3 is provided in the injection cavity 42a, and the third pressure sensor Y3 is electrically connected to the host computer.

The third pressure sensor Y3 is configured to detect the pressure in the injection cavity 42a.

In this embodiment, the pressure in the injection cavity 42a is fed back and monitored through the third pressure sensor Y3. When the pressure in the injection cavity 42a is too high, the servo valve 41 is controlled to release the pressure. When the pressure in the injection cavity 42a is too low, the servo valve 41 is controlled to supplement the pressure.

The above are only some embodiments of the present disclosure, and do not limit the scope of the present disclosure thereto. Any equivalent structure transformation made according to the description and drawings of the present disclosure, or direct/indirect application in other related technical fields are included in the scope of the present disclosure.

## Claims

1. A water-assisted melt-push-back injection molding method, applied to a water-assisted injection molding machine comprising a barrel for injecting a plastic melt into a mold, an injection molding assembly for injecting the plastic melt in the barrel into the mold, and a fluid injection device for injecting fluid, the fluid injection device being communicated with the mold,
**characterized in that**, the water-assisted melt-push-back injection molding method comprises following operations:
(S100), controlling the fluid injection device to inject the fluid into the mold, to push an unsolidified plastic melt back into the barrel;
(S200), obtaining a fluid pressure value of the fluid, a current pressure value of the barrel, and a displacement of the injection molding assembly in the barrel; and
(S300), adjusting a movement velocity of the injection molding assembly moving away from the mold according to the fluid pressure value, the current pressure value of the barrel and the displacement.

2. The water-assisted melt-push-back injection molding method of claim 1, wherein the operation of adjusting the movement velocity of the injection molding assembly moving away from the mold according to the fluid pressure value, the current pressure value of the barrel and the displacement comprises:
calculating the fluid pressure value of the fluid and the current pressure value of the barrel, to obtain an actual pressure difference value; and
adjusting the movement velocity of the injection molding assembly moving away from the mold according to the actual pressure difference value and a preset pressure difference value.

3. The water-assisted melt-push-back injection molding method of claim 2, wherein the operation of adjusting the movement velocity of the injection molding assembly moving away from the mold according to the actual pressure difference value and the preset pressure difference value comprising:
comparing the actual pressure difference value with the preset pressure difference value, and when the actual pressure difference value is less than the preset pressure difference value, reducing the current pressure value of the barrel;
or,
when the actual pressure difference value is greater than the preset pressure difference value, increasing the current pressure value of the barrel.

4. The water-assisted melt-push-back injection molding method of claim 3, wherein:
the water-assisted injection molding machine further comprises an injection cylinder for adjusting the current pressure value of the barrel, and a servo valve for controlling pressure of the injection cylinder,
the injection cylinder comprises an injection cavity and a retreat cavity, and
the operation of comparing the actual pressure difference value with the preset pressure difference value, and when the actual pressure difference value is less than the preset pressure difference value, reducing the current pressure value of the barrel, when the actual pressure difference value is greater than the preset pressure difference value, increasing the current pressure value of the barrel comprises:
when the actual pressure difference value is less than the preset pressure difference value, controlling the servo valve to reduce pressure in the injection cavity or increase pressure in the release cavity; and
when the actual pressure difference value is greater than the preset pressure difference value, controlling the servo valve to increase pressure in the injection cavity or reduce pressure in the release cavity.

5. The water-assisted melt-push-back injection molding method of claim 1, wherein the operation of adjusting the movement velocity of the injection molding assembly moving away from the mold according to the fluid pressure value, the current pressure value of the barrel and the displacement comprises:
calculating the fluid pressure value, to obtain a fluid velocity value;
calculating the displacement, to obtain a current velocity value of the injection molding assembly;
calculating the fluid velocity value and the current velocity value of the injection molding assembly, to obtain an actual velocity difference value per unit time; and
adjusting the movement velocity of the injection molding assembly moving away from the mold according to the actual velocity difference value and a preset velocity difference value.

6. The water-assisted melt-push-back injection molding method of claim 5, wherein the operation of adjusting the movement velocity of the injection molding assembly moving away from the mold according to the actual velocity difference value and the preset velocity difference value comprises:
comparing the actual velocity difference value with the preset velocity difference value, if the actual velocity difference value is less than the preset velocity difference value, increasing the current pressure value of the barrel; if the actual velocity difference value is greater than the preset velocity difference value, reducing the current pressure value of the barrel.

7. The water-assisted melt-push-back injection molding method of claim 6, wherein:
the water-assisted injection molding machine further comprises an injection cylinder for adjusting the current pressure value of the barrel, and a servo valve for controlling pressure of the injection cylinder,
the injection cylinder comprises an injection cavity and a retreat cavity, and
the operation of comparing the actual velocity difference value with the preset velocity difference value, if the actual velocity difference value is less than the preset velocity difference value, increasing the current pressure value of the barrel; if the actual velocity difference value is greater than the preset velocity difference value, reducing the current pressure value of the barrel comprises:
when the actual velocity difference value is less than the preset velocity difference value, controlling the servo valve to increase pressure in the injection cavity or reduce pressure in the release cavity; and
when the actual velocity difference value is greater than the preset velocity difference value, controlling the servo valve to reduce pressure in the injection cavity or increase pressure in the release cavity.

8. A water-assisted injection molding machine, **characterized by** comprising:
a barrel (10) provided with an injection molding part, wherein the barrel (10) is configured to inject a plastic melt into a mold;
an injection molding assembly (20) movably connected to the barrel (10), wherein the injection molding assembly (20) is configured to inject the plastic melt of the barrel (10) into the mold;
a fluid injection device (30) provided with a fluid injection part, wherein the fluid injection device (30) is configured to inject fluid into the mold;
a pressure control assembly electrically connected to a host computer, wherein the pressure control assembly is connected to the injection molding assembly (20), and the pressure control assembly is controlled by the host computer to adjust a movement velocity of the injection molding assembly (20) moving away from the mold; and
a memory and a processor, wherein the memory stores a water-assisted melt-push-back injection molding program, and when the water-assisted melt-push-back injection molding program is executed by the processor, the water-assisted melt-push-back injection molding method of any one of claims 1 to 7 is realized.

9. The water-assisted injection molding machine of claim 8, wherein the pressure control assembly comprises:
a servo valve (41) electrically connected to the host computer;
an injection cylinder (42) connected to the servo valve (41), the servo valve (41) being controlled by the host computer to increase or reduce fluid pressure in the injection cylinder (42); and
a piston rod (43) movably connected to the injection cylinder (42).

10. The water-assisted injection molding machine of claim 9, further comprising:
a first pressure sensor (Y1) provided at the injection molding part of the barrel (10), wherein the first pressure sensor (Y1) is electrically connected to the host computer, and the first pressure sensor (Y1) is configured to detect a current pressure value of the injection molding part of the barrel (10);
a position sensor (W1) provided in the injection cylinder (42), wherein the position sensor (W1) is connected to the host computer, and the position sensor (W1) is configured to detect a displacement of the injection molding assembly (20); and
a second pressure sensor (Y2) provided at the fluid injection part of the fluid injection device (30), wherein the second pressure sensor (Y2) is electrically connected to the host computer, and the second pressure sensor (Y2) is configured to detect fluid pressure of the fluid injection part of the fluid injection device (30).
